# EUROPÄISCHE PATENTSCHRIFT

(11) **EP 3 347 443 B1**
(45) Veröffentlichungstag und Bekanntmachung des Hinweises auf die Patenterteilung: **15.11.2023**
(21) Anmeldenummer: 16784385.3
(22) Anmeldetag: 03.09.2016
(51) Int. Cl.: C11B 1/04, C11B 1/10, C11B 3/00

(54) **VERFAHREN ZUM KOMBINIERTEN ZELLAUFSCHLUSS UND EXTRAKTION ÖLHALTIGER SAATEN**
METHOD OF COMBINED CELL DIGESTION AND EXTRACTION OF OIL-CONTAINING SEEDS
PROCÉDÉ DE DÉSAGRÉGATION CELLULAIRE COMBINÉE À UNE EXTRACTION DE GRAINES OLÉAGINEUSES

(30) Priorität: 11.09.2015 DE 102015011889
(43) Veröffentlichungstag der Anmeldung: 18.07.2018
(73) Patentinhaber: B+B Engineering GmbH, 39104 Magdeburg (DE); Fraunhofer-Gesellschaft zur Förderung der angewandten Forschung e.V., 80686 München (DE)
(72) Erfinder: BÖRNER, Gunter, 39171 Sülzetal (DE); BRODKORB, Sebastian, 39106 Magdeburg (DE); PUFKY-HEINRICH, Daniela, Dr., 04416 Markkleeberg (DE); FRANKE, Sandra, 06618 Naumburg (DE); POLAGE, Sarah, 04703 Leisnig (DE); ZANG, Marcus, 04416 Markkleeberg (DE)
(74) Vertreter: Fischer, Volker
(86) Internationale Anmeldenummer: PCT/DE2016/000337
(87) Internationale Veröffentlichungsnummer: WO 2017/041776

(56) Entgegenhaltungen:
- EP-B1- 0 312 855
- DD-A1- 145 925
- US-A- 3 816 389
- US-A- 4 515 726

## Beschreibung

Die Erfindung betrifft ein Verfahren zum kombinierten Zellaufschluss und Extraktion ölhaltiger Saaten.

Zur Erzielung maximaler Ölausbeuten in der modernen ölsaatenverarbeitenden Industrie kommen als Extraktionsmittel hauptsächlich Gemische aus n-Paraffinen (C5, C6, C7), sogenanntes Siedegrenzenbenzin, beziehungsweise reine n-Paraffine (vorzugsweise n-Hexan) zum Einsatz, da sie ein hohes Lösevermögen für Triglyceride besitzen und verfahrenstechnisch günstig aus der Miscella abdestilliert werden können. Die in den letzten Jahrzehnten vervollkommneten Technologien ermöglichen neben hohen Ölausbeuten die Gewinnung von Futtermittel aus dem Extraktionsrückstand sowie als Nebenprodukt Gemische aus verschiedenen Phospholipiden zur Gewinnung von Lecithin.

Alternativ zur Lösungsmittelextraktion sind verschiedene Verfahren der mechanischen Ölgewinnung in die industrielle Praxis eingeführt, wie zum Beispiel Kalt- und Warmpressverfahren mit oder ohne vorherige mechanische und thermische Vorbehandlung. Nachteilig für die mechanischen Verfahren zur Ölgewinnung sind die deutlich niedrigeren Ölausbeuten allerdings bei verbesserter Ölqualität im Vergleich zur Lösungsmittelextraktion.

Eine Lösungsmittelextraktion erfordert eine mechanische und thermische Aufbereitung der Saat. Dies dient dem effektiven Zugang des Lösungsmittels an das zu lösende Öl in den Zellen der Ölsaat. Gleichzeitig muss eine ausreichende Perkolation während des Kontaktes der aufbereiteten Ölsaat mit dem Lösungsmittel sichergestellt werden. Industriell angewendete Verfahren zur Aufbereitung der Saat sind Zerkleinern, Brechen, Flockieren mit anschließender thermischer Konditionierung gefolgt vom mechanischen Pressen als erster Stufe der Ölgewinnung. Aufbereitung der Ölsaat und Lösungsmittelextraktion bilden daher einen untrennbaren Zusammenhang.

Die Verwendung von Siedegrenzenbenzin oder n-Hexan als Lösungsmittel gewährleistet zum einen eine hohe Wirtschaftlichkeit, ist aber zum anderen mit wesentlichen Nachteilen verbunden. Bei den herkömmlichen Verfahren zur Extraktion mit Kohlenwasserstoffen werden unerwünschte Fettbegleitstoffe (zum Beispiel Phospholipide, Lipochrome) extrahiert. Das Öl muss, nach dem herkömmlichen Hexan-Verfahren hergestellt, vollständig raffiniert werden.

Siedegrenzenbenzin und n-Hexan sind nicht dafür geeignet, spezifische antinutritive Substanzen (zum Beispiel Glucosinolate und ihre Hydrolyseprodukte bei Rapssaat) extraktiv aus der Saat zu entfernen, es sei denn, dass sie als lipophile Bestandteile mit dem Öl extrahiert werden. Glucosinolate und ihre Hydrolyseprodukte, zum Beispiel bei Rapssaat, verbleiben im Extraktionsrückstand und schränken so die Vermarktung dieses Produktes erheblich ein.

Weiterhin muss die Verwendung von Siedegrenzenbenzin und n-Hexan zur Herstellung von Lebens- und Futtermitteln zukünftig in Frage gestellt werden, da es auch in Spuren als gesundheitsschädlich einzustufen ist. Die vorher genannten Nachteile sind bereits seit Jahrzehnten Motivation auf der Suche nach alternativen Lösungsmitteln mit entsprechend angepassten Verfahren gewesen.

Verdichtete Gasgemische sind ein alternativer Ansatz zur Extraktion von Ölen und Fetten aus Ölsaaten (EP 0721980 A2). Propan gemischt mit Kohlenstoffdioxid, jeweils im unterkritischen Zustand, ermöglicht die selektive Extraktion von reinen Ölen. Durch die Entspannung des Systems verdampft das Lösungsmittel, so dass Öl und Extraktionsschrot lösungsmittelfrei gewonnen werden können.

Ein weiteres Verfahren verwendet überkritisches Kohlenstoffdioxid als Lösungsmittel für die Entölung (WO 02/054884 A1). Durch den gezielten Einsatz von überkritischem CO₂ kann ein entöltes Extraktionsmehl gewonnen werden, das einen hohen Gehalt an Lecithin aufweist und nahezu frei von Öl ist. Die daraus gewonnenen Proteinisolate zeichnen sich durch eine herausragende Emulgierfähigkeit aus, die sich von vergleichbaren Produkten deutlich unterscheiden.

Verglichen mit der konventionellen Hexan-Extraktion ist die Ölextraktion mit verdichteten Gasen deutlich kostenintensiver und im industriellen Einsatz bei der Verarbeitung hoher Tagesleistungen an Ölsaaten nicht wettbewerbsfähig. Damit ist deren Verwendung nur für die Gewinnung spezieller hochpreisiger Produkte und Ingredienzien im Rahmen einer sehr spezialisierten Produktion sinnvoll möglich.

Das FRIOLEXO-Verfahren beschreibt einen Prozess zur hexanfreien Direktextraktion von Lipiden und beruht auf der Verdrängung des Öls mittels Wasser aus vorzerkleinerten ölhaltigen Ausgangsmaterialien. Es wurde von GEA Westfalia Separator AG und Dr. Frische GmbH entwickelt (WO 96/05278 A1) und basiert auf der Nutzung einer speziellen Dekanterzentrifuge zur mechanischen Abtrennung des Öls, so dass eine energieintensive Destillation entfällt. Hohe Ölqualitäten vergleichbar mit kaltgepressten Pflanzenölen können erreicht werden. Der Kontakt zwischen Öl und Wasser als Extraktionsmittel unter Anwesenheit von emulgierend wirkenden Phospholipiden führt zur Bildung von Emulsionen, die die Phasentrennung deutlich erschweren.

Ein weiteres Verfahren zur wässrigen Ölextraktion wurde an der Technischen Universität Berlin entwickelt. Lipide sind nicht in Wasser löslich, sodass dieses Verfahren auf dem Verdrängen des Öls aus der Saat beruht, analog dem vorher diskutierten FRIOLEX^{®}-Verfahren. Damit die Ölverdrängung realisiert werden kann, ist ein intensiverer mechanischer Zellaufschluss als bei der konventionellen Verarbeitung notwendig. Des Weiteren macht das notwendige Verdrängen des Öls aus der Zelle der Ölsaat den Einsatz eines Perkolationsextrakteurs unmöglich. Die Extraktion erfolgt daher in einem Rührreaktor. Vorteilhaft an diesem Verfahren ist die Vermeidung einer kostenintensiven Destillation zur Entfernung des Lösungsmittels. Jedoch sind die aufwendige Entsorgung des Prozesswassers sowie die Bildung von stabilen Emulsionen nachteilig, so dass diese Art der Ölextraktion nicht industriell umgesetzt wurde (Dissertation A. Wäsche, "Simultane Öl- und Proteingewinnung bei Raps" 2002, Seite 124-126).

Die Ölgewinnung mit alkoholischen Lösungsmitteln wird seit vielen Jahren untersucht. Hierbei standen vor allem Ethanol und Isopropanol im Mittelpunkt der Untersuchungen zur Entwicklung alternativer Verfahren zur Ölsaatenextraktion. In seiner Dissertation hat W. Brautzsch die ethanolische Ölextraktion für Rapssaat im Labormaßstab untersucht. Die grundsätzlichen Verfahrensstufen wie bei der Extraktion mit Hexan werden dabei nicht wesentlich verändert. Es wird von einer analogen Saataufbereitung allerdings ohne Pressen der Ölsaat vor der Extraktion ausgegangen (Direktextraktion). Um jedoch bei einer solchen Verfahrensauswahl das Öl aus der Saat extrahieren zu können, muss die vollständige Öllöslichkeit im Ethanol erreicht werden. Das heißt, die Extraktion findet bei Temperaturen über 100 °C und einem Druck von größer 3 bar.a statt. Diese verfahrenstechnischen Grundbedingungen erfordern die Konstruktion eines neuen Extraktionsapparates. Konventionelle Extrakteure sind dafür nicht mehr geeignet. Es konnte nachgewiesen werden, dass dabei ein sehr reines Öl gewonnen wurde. Aufgrund der geringen Selektivität des Ethanols wurden antinutritive Substanzen, wie zum Beospiel Glucosinolate, extrahiert, so dass ein hochwertiges glucosinolatarmes Raps-Extraktionsmehl gewonnen werden konnte. Diese Vorteile konnten jedoch die Nachteile einer aufwendigeren Extraktion in wirtschaftlicher Hinsicht nicht aufwiegen, sodass keine industrielle Umsetzung gelang. (Dissertation W. Brautzsch, "Die Ethanol-Extraktion - ein Verfahren zur Verbesserung der Qualität von Extraktionsölen und -schroten des Rapses" 1984, Seite 104).

Das VEB Kombinat Öl und Margarine in Magdeburg hat gemäß der DD 145 925 A1 und analog der GB 2 060 673 A 1981 ein Verfahren zur Behandlung pflanzlicher thioglucosidhaltiger Rohstoffe patentiert. Durch die beschriebene ethanolische Extraktion können Brassica- und Crambesamen sowie deren Verarbeitungsprodukte gleichzeitig entfettet und detoxifiziert werden.

Sowohl in der Dissertation von R. Brautzsch als auch in der oben genannten DD 145 925 A1 wird beschrieben, dass eine ausreichende Öllöslichkeit bei Brassica- und Crambesamen erst bei einer Extraktionstemperatur über der Verdampfungstemperatur des Ethanols bei einem Druck während der Extraktion von über 2,5 bar.a erreicht wird. Die Aufbereitung der Saat vor der Extraktion erfolgt konventionell, sodass eine Perkolationsextraktion ermöglicht werden kann. Vorteilhaft ist, dass durch eine anschließende Temperaturabsenkung auf 20 °C das gelöste Öl teilweise aus der Miscella ausfällt. Ein energieaufwendiges Abdestillieren des Lösungsmittels ist somit nicht notwendig. Durch einen weiteren Abkühlschritt auf unter 10 °C erfolgt die Ausfällung von Begleitstoffen. Das zurückbleibende Lösungsmittel kann ohne eine weitere Aufreinigung mehrmals in den Extraktionskreislauf zurückgeführt werden.

Die Shell Oil Company in Houston (Texas) hat 1981 ein Verfahren zur Ölextraktion mit Isopropanol beschrieben. Die Extraktion mittels Isopropanol ist grundsätzlich mit ethanolischen Extraktionsverfahren vergleichbar. Hierbei wird jedoch der zusätzliche Vorteil genutzt, dass eine gute Öllöslichkeit schon bei vergleichbar niedrigeren Temperaturen als bei der ethanolischen Extraktion erreicht wird. Dadurch kann auf eine Extraktion im Überdruckbereich verzichtet werden, wie in der US 4 515 726 A beschrieben. Hauptziel des in der US 4 515 726 A beschriebenen Verfahrens ist die Gewinnung eines phosphatid-/lecithinreichen Produktes aus Sojabohnen. Das in der US 4 515 726 A beschriebene Verfahren ist somit auf die Verarbeitung von Sojabohnen beschränkt. Saataufbereitung und Perkolationsextraktion nutzen dabei die Grundverfahren, wie dies in der Industrie weitgehend angewendet wird.

Aus den geschilderten Entwicklungen geht hervor, dass es bislang nicht gelungen ist, ein wirtschaftlich vergleichbares Extraktionsverfahren zur Hexan-Extraktion von Ölsaaten industriell zu etablieren. Mag es bei der Verarbeitung von Sojabohnen einzelne Anwendungen geben, ist dies bei Raps und anderen hoch ölhaltigen Saaten bislang vor allem aus wirtschaftlichen Gründen nicht gelungen. Insbesondere bei der Rapsverarbeitung geht damit ein erhebliches Wertschöpfungspotential verloren. Dieses Potential liegt insbesondere in der Gewinnung qualitativ hochwertiger Rohöle bereits in der Stufe der Saatenverarbeitung in der Gewinnung hochwertiger Extraktionsmehle ohne antinutritive Substanzen und hohem Proteingehalt sowie in der Isolierung wertvoller nativer Inhaltsstoffe.

Alle vorgenannten signifikanten Beispiele gehen dabei von einer konventionellen Saataufbereitung (Zerkleinern, Brechen, Flockieren, Pressen) aus, die die Anwendung einer Perkolationsextraktion auch bei den alkoholischen Lösungsmitteln beschreiben. Dies scheint jedoch nicht ausreichend zu sein, eine wesentliche Verbesserung des komplexen Extraktionsvorganges zur Erschließung weiterer Wertschöpfungspotentiale vor allem bei hoch ölhaltigen Saaten zu erreichen.

Ein weiterer Nachteil der oben genannten Beispiele zeigt sich darin, dass die Verarbeitung nahezu vollständig geschälter Ölsaaten nicht möglich ist. Essentiell für den Einsatz von Pressverfahren ist das Vorhandensein von Rohfaser- und Ballaststoffanteilen in der Ausgangssaat. Diese sind für einen Produkttransport und eine Aufrechterhaltung des Druckes in der Presse erforderlich. Wenn jedoch nahezu vollständig geschälte Saaten (das heißt mit reduziertem Faseranteil) verarbeitet werden, ist die Verwendung von Pressverfahren nicht möglich. In diesem Fall muss die Ölgewinnung ausschließlich mittels Lösungsmittelextraktion, der sogenannten Direktextraktion, erfolgen.

Aktuell werden für die Lösungsmittelextraktion vorwiegend Perkolationsextrakteure verwendet, deren Anwendung bei nahezu vollständig geschälter Saat noch nicht hinreichend untersucht wurde. Die Schälung ist jedoch Voraussetzung zur Gewinnung von Extraktionsmehlen mit hohem Protein- und niedrigeren Faseranteilen. Eine weitere Optimierung der Saataufbereitung hin zu einem vollständigen mechanischen Zellaufschluss bei der Ölsaat erscheint dabei eine erfolgversprechende Möglichkeit.

In seiner Dissertation (Dissertation A. Wäsche, "Simultane Öl- und Proteingewinnung bei Raps" 2002, Seite 17) schreibt A. Wäsche, dass bei einer alkoholischen als auch einer wässrigen Extraktion ein nahezu vollständiger Zellaufschluss notwendig ist. Es wird beschrieben, dass die Größe der Zellen in den Saatkörnern ca. 30 x 20 x 20 µm beträgt. Um einen rein mechanischen Zellaufschluss für die Extraktion zu gewährleisten, muss sich das Zerkleinerungsziel an dieser Größe orientieren.

Ein weiterer essentieller Bestandteil der Arbeit von A. Wäsche ist die ausführliche Beschreibung eines effektiven Zellaufschlusses. Die Eignung von Rotor-Stator-Systemen und Hochdruck-Homogenisatoren wird im Labormaßstab untersucht und verglichen. Die Auswertung zeigt, dass mit beiden Verfahren ein nahezu vollständiger Zellaufschluss erreicht werden konnte. Grundsätzlich unterscheiden sich beide Verfahren in der Art und Weise sowie in der Höhe des Energieeintrages in das System. Mit Hochdruck-Homogenisatoren können hohe spezifische Energien nahezu adiabat in das System eingebracht werden. Dies hat zur Folge, dass aufgrund des hohen spezifischen Energieeintrages stabile Emulsionen bei der Hochdruck-Homogenisation gebildet werden. Bei der Verwendung des Rotor-Stators wurden eine Erwärmung um 40 K und ein geringerer spezifischer Energieeintrag gemessen.

Das Erzielen einer derartigen Produktfeinheit impliziert die weitere Untersuchung von Fein- beziehungsweise Feinst-Mahlverfahren. Üblicherweise wird durch die Zugabe von flüssigen Zuschlagstoffen (Mahlhilfsmittel) das Agglomerieren der Produkte verhindert und der Mahlprozess energetisch begünstigt. Zu diesen sogenannten Nass-Mahlverfahren gehören schnell laufende Rotor-Stator-Systeme, Hochdruck-Homogenisatoren und auch Kugelmühlen, letzte kommen aber aufgrund ihres zu geringen Energieeintrages nicht in Betracht (K. Schwister, V. Leven "Verfahrenstechnik für Ingenieure: Ein Lehr- und Übungsbuch" 2013, Seite 197-198, ISBN 978-3-446-43136-2).

Die Dorr-Oliver Deutschland GmbH hat 1994 ein Verfahren zur Extraktion von pflanzlichen Fetten und Ölen patentieren lassen. Hier wird der Zellaufschluss durch eine Reihe von aufeinanderfolgenden Stufen mit integrierten Rotor-Stator-Systemen realisiert, wie in der EP 0 312 855 B1 beschrieben. Eine industrielle Umsetzung und der Nachweis der Wirtschaftlichkeit gelangen bislang nicht.

Der vorliegenden Erfindung liegt daher die Aufgabe zugrunde, ein Verfahren anzugeben, das eine Kombination von effektivem Zellaufschluss und einer Extraktion mit Ethanol darstellt, wobei nahezu vollständig geschälte hoch ölhaltige Saaten wie zum Beispiel Rapssaat verarbeitet werden können, die Endprodukte Öl und Extraktionsmehl in neuer qualitativ hochwertiger Form unter schonenden Prozessbedingungen und hoher Ölausbeute gewonnen werden und die Isolierung von wertvollen Inhaltsstoffen gelingt. Durch diese komplexen Vorteile soll die Wirtschaftlichkeit gegenüber der konventionellen Hexan-Extraktion sichergestellt werden.

Die Aufgabe wird durch ein Verfahren gemäß Anspruch 1 gelöst. Vorteilhafte Ausgestaltungen sind in den abhängigen Ansprüchen angegeben.

Erfindungsgemäß wird ein Verfahren zum kombinierten Zellaufschluss und Extraktion ölhaltiger Saaten beschrieben:
- Herstellen einer Maische aus Ölsaaten und Ethanol als Lösungsmittel, wobei die Ölsaat einen Ölgehalt von ≥ 30 Masse-% aufweist, und ausgewählt ist aus Raps- und Sonnenblumensaat,
- Zellaufschluss der Ölsaaten in Ethanol, wobei der Zellaufschluss mechanisch erfolgt, bis eine mittlere Partikelgröße von ≤ 50 µm erreicht wird, wodurch die Ölsaat soweit zerkleinert wird, dass ein effektiver Zellaufschluss zur Freisetzung des vorhandenen Öls erfolgt,
- eine nachfolgende ethanolische Extraktion durch eine Kombination von Lösungsmittel- und Verdrängungsreaktion, wobei als alkoholisches Lösungsmittel Ethanol mit einem Wassergehalt von maximal 5 Gew.-% verwendet wird und der kleinere Teil des in den Samenzellen der Ölsaaten enthaltenen Öls und der darin enthaltenen alkohollöslichen Inhaltstoffe entsprechend dem Lösungsvermögen des Ethanols für das Öl und die alkohollöslichen Inhaltsstoffe in das Ethanol übergehen und ein anderer größerer Teil des Öls durch das Ethanol aus den Samenzellen der Ölsaat verdrängt wird, wobei sich eine freie Ölphase im Ethanol ausbildet,
- Abtrennen der freien Ölphase und des im Ethanol gelösten Öls und Abtrennen der alkohollöslichen Inhaltsstoffe aus dem Ethanol, wobei die freie Ölphase bei der Abtrennung einen Anteil an Phosphatiden von ≤ 0,1%, bevorzugt ≤ 0,025 %, und einen Anteil freier Fettsäuren von ≤ 0,5 %, bevorzugt ≤ 0,3 %, aufweist,
- Separation des verbleibenden Extraktionsrückstandes nach der Extraktion und Abtreiben des restlichen Ethanols im Extraktionsrückstand unter schonenden Bedingungen im Vakuumbereich bei einer Temperatur ≤ 90 °C und einem Druck von p ≤ 500 mbar.a,
wobei Zellaufschluss und Extraktion bei einem definierten Masse-Verhältnis von Ölsaat zu Ethanol von 1 : 3 bis 1 : 8, bevorzugt bei 1 : 5, durchgeführt werden.

Bei den erfindungsgemäßen Masse-Verhältnissen übersteigt die Menge des freigesetzten/verdrängten Öls das Löslichkeitsvermögen des Ethanols bei Prozessbedingungen unterhalb des atmosphärischen Siedepunktes von Ethanol, sodass das freigesetzte/verdrängte Öl nicht gelöst werden kann und dass dieses freie Öl als separate flüssige Phase vorliegt. Dieses Öl wird ohne Destillation ökonomisch gewonnen. Das im Ethanol gelöste Öl kann ebenfalls durch Absenkung des Lösungsvermögens bei reduzierter Temperatur abgetrennt werden.

Vorteilhaft ist hierbei die Kombination von vorwiegend aus der Ölsaat verdrängtem Öl als separate Ölphase und im Ethanol gelösten Öls als Extraktionsphase zur schonenden Gewinnung von Öl aus ölhaltigen Saaten.

Im Sinne der vorliegenden Erfindung werden als Ölsaat ölreiche Saaten bezeichnet mit einem Ölgehalt ≥ 30 Masse-%, die zur Gewinnung von Pflanzenöl kommerziell genutzt werden können. Dies sind Raps- und Sonnenblumensaat als Ölsaaten mit ähnlich hohem Ölgehalt, deren Gewinnung zur nahezu vollständigen Entölung der Ausgangssaat vorwiegend im konventionellen Press- und Extraktionsverfahren bereits industriell erfolgt.

Als Miscella (Gemischtes) wird vorliegend ein Stoffgemisch aus organischem Extraktions-/Lösemittel und Öl bezeichnet, das während der Gewinnung von Pflanzenölen als Zwischenprodukt anfällt.

Als Extraktmix wird eine Mischphase aus Lösungsmittel, Öl und gelösten Wertstoffen bezeichnet, die bei der erfindungsgemäßen Verwertung von Ölsaaten im Separationsschritt der flüssigen Phasen zwischen der Miscella und dem freien Öl anfallen kann.

Im Sinne der vorliegenden Erfindung werden als Wertstoffe alkohollösliche Inhaltsstoffe bezeichnet, die bei der Gewinnung von Pflanzenöl eine zusätzliche wirtschaftliche Wertschöpfung darstellen beziehungsweise deren Entfernung den Wert der primären Produkte (Öl und Extraktionsmehl) steigert. Dies sind insbesondere Phospholipide, phenolische Verbindungen, Glucosinolate (bei Raps) und weitere.

Bei der erfindungsgemäßen Abtrennung der freien Ölphase weist die freie Ölphase soweit reduzierte Gehalte an Phospholipiden und Lipochromen auf, dass bei einer anschließenden Raffination zu Lebensmittel-Qualität die Stufen der Entschleimung entfallen und der Aufwand für die Bleichung deutlich reduziert ist. Das freie Öl weist damit eine Halbraffinat-Qualität auf. Dies bedeutet einen Phosphor-Gehalt von ≤ 50 ppm, bevorzugt ≤ 30 ppm, besonders bevorzugt ≤ 10 ppm, oder einen Anteil an Phosphatiden von ≤ 0,1 %, bevorzugt ≤ 0,05 %, besonders bevorzugt ≤ 0,025 %. Demgegenüber weisen übliche Werte für extrahiertes Rapsöl nach der konventionellen Extraktion mit Hexan einen Phosphor-Gehalt von ≥ 300 ppm oder einen Anteil an Phosphatiden von ≥ 0,75 % auf. Der Anteil freier Fettsäuren in der freien Ölphase ist nach dem erfindungsgemäßen Verfahren ≤ 0,5 %, bevorzugt ≤ 0,4 %, besonders bevorzugt ≤ 0,3 %, wobei übliche Werte nach der konventionellen Extraktionsmethode zwischen 1,0 bis 2,0 % liegen. Das Öl ist deutlich heller als normal extrahierte Öle. Der dadurch reduzierte Raffinationsaufwand ist ein Ergebnis und ein Vorteil des erfindungsgemäßen Verfahrens.

Die Separation des verbleibenden Extraktionsrückstandes nach der Extraktion und Abtreiben des restlichen Ethanols im Extraktionsrückstand erfolgt unter schonenden Bedingungen im Vakuumbereich, wobei unter schonenden Bedingungen Temperaturen < 90 °C, bevorzugt zwischen 50 und 90 °C und ein Druck unterhalb des atmosphärischen Druckes, bevorzugt zwischen 50 und 500 mbar.a verstanden wird.

In einer ersten Ausführungsform der Erfindung kann vor dem Herstellen einer Maische aus der Ölsaat und Ethanol eine nahezu vollständige Schälung der Ölsaat erfolgen, da die erfindungsgemäße Kombination aus Zellaufschluss und Extraktion eine Verarbeitung vorherig nahezu vollständig geschälter Ölsaaten begünstigt und im Sinne eines hohen Proteingehaltes im Extraktionsschrot auch angestrebt wird.

In einer weiteren Ausgestaltung der Ausführungsform wird die erforderliche Trocknung der Ölsaat vor der erfindungsgemäßen Kombination aus Zellaufschluss und Extraktion mit der angestrebten vorherigen Schälung der Ölsaat kombiniert.

In einer weiteren Ausführungsform der Erfindung erfolgt das Herstellen einer Maische aus der Ölsaat und dem Ethanol ohne vorherige Schälung.

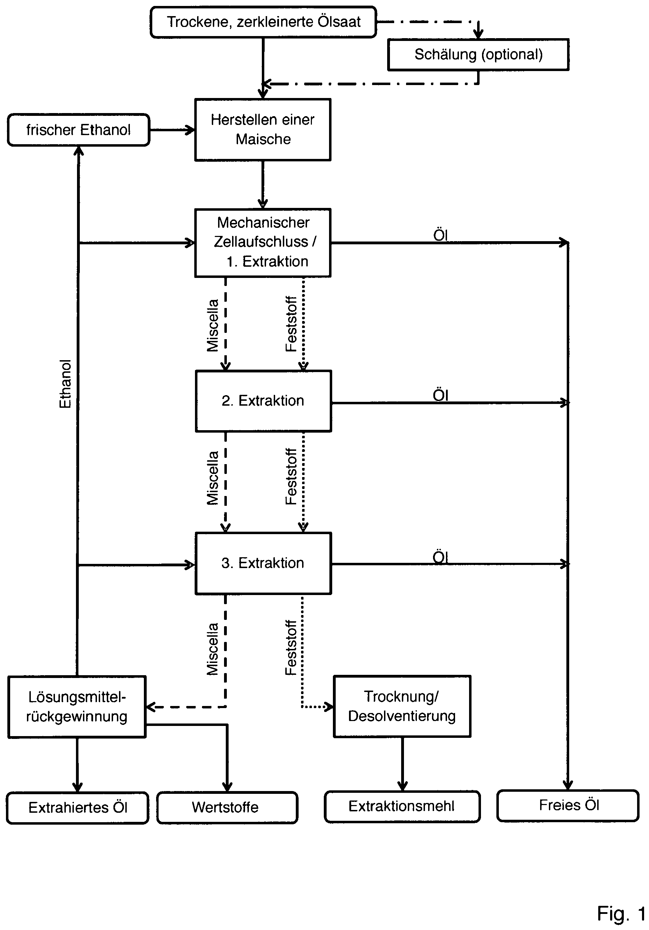

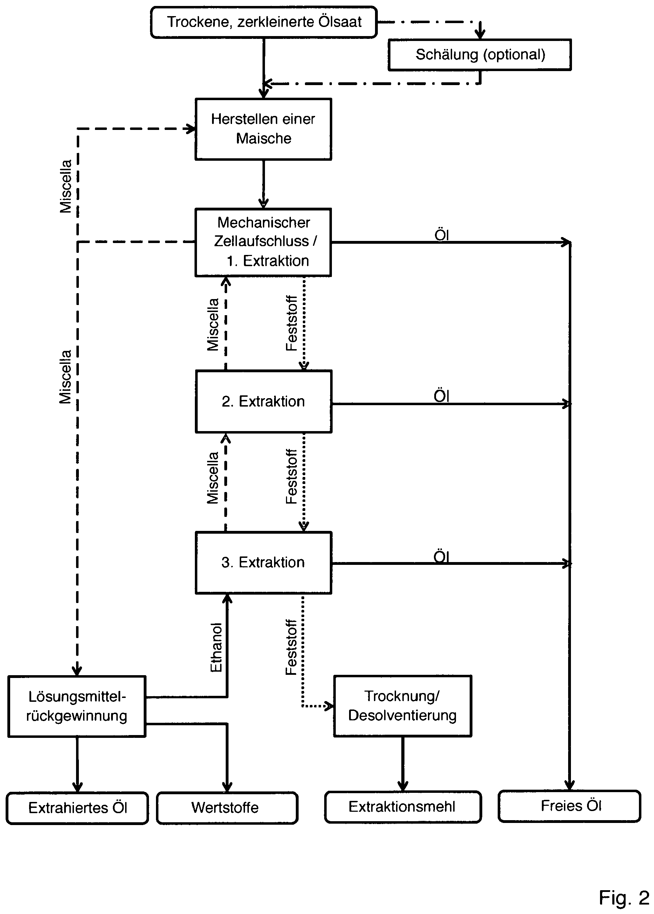

In einer weiteren Ausführungsform der Erfindung ist das Verfahren als mehrstufig kontinuierliches oder quasi-kontinuierliches Verfahren im Gleichstrom (Fig. 1) oder im Gegenstrom (Fig. 2) ausgebildet. Eine Kombination beider Verfahrensgestaltungen ist möglich.

In einer weiteren Ausführungsform der Erfindung erfolgt der Zellaufschluss mittels eines Rotor-Stator-Systems oder mittels Hochdruck-Homogenisatoren, bevorzugt mittels Rotor-Stator-System, mit denen ein Zellaufschluss bis zu einer mittleren Partikelgröße von ≤ 50µm realisiert werden kann und deren Energieeintrag nicht zu einer thermischen Schädigung der Ölsaat führen.

In einer weiteren Ausführungsform der Erfindung erfolgt die Abtrennung der flüssigen Phasen (Miscella/freies Öl) vom Extraktionsrückstand mittels Druckfiltration, Siebpressen, Zentrifuge oder Dekanter, wobei die Abtrennung der Fein- und Feinstpartikel aus dem Zellaufschluss sichergestellt sein muss.

In einer weiteren Ausführungsform erfolgt nach dem Zellaufschluss die Separation der ethanolischen Miscella von der freien Ölphase in einem Sedimentationstank oder mittels Zentrifugalkraft. Wichtig dabei ist, dass vor der Abtrennung des freien Öls die Miscella auf vorzugsweise 4 °C bis 25 °C gekühlt wird. In einem kontinuierlichen Verfahren erfolgt dies über einen separaten Wärmetauscher oder über Wärmeaustauschflächen im Sedimentationstank.

In einer weiteren Ausführungsform erfolgt die Extraktion unterhalb der atmosphärischen Siedetemperatur des Ethanols. Bevorzugt erfolgt die Extraktion bei Umgebungsdruck und einer Temperatur von ca. 70 °C.

In einer weiteren Ausführungsform wird der alkoholfeuchte Extraktionsrückstand nach der erfolgten Extraktion erst mechanisch ausgepresst und anschließend vorzugsweise im Vakuumtrockner schonend getrocknet und dabei vom Ethanol befreit.

In einer weiteren Ausführungsform der Erfindung wird nach erfolgter Separation der freien Ölphase von der Miscella diese dem verbleibenden Extraktionsrückstand wieder zugeführt. Dadurch kann die separierte Miscella für weitere extraktive Verdrängungsstufen verwendet werden.

In einer weiteren Ausführungsform der Erfindung wird bei der Separation des gelösten Öls und der Wertstoffe aus der Miscella sowie aus dem Extraktmix das Ethanol zurückgewonnen. Dadurch ist eine wiederholte Nutzung des Ethanols für weitere Extraktionsstufen bis zur nahezu vollständigen Extraktion des Öls und der Wertstoffe aus der Ölsaat möglich.

In einer weiteren Ausführungsform erfolgt die Rückgewinnung des Ethanols mittels Vakuumverdampfung. Vor der Eindampfung kann eine Konzentration der Miscella mittels Membrantrennverfahren, vorzugsweise Ultra-Filtration, erfolgen.

Gemäß der Erfindung ist die Verwendung von hoch ölhaltigen Saaten wie Raps- und Sonnenblumensaat, bevorzugt Raps, vorgesehen.

Das erfindungsgemäße Verfahren stellt eine Kombination eines effektiven Zellaufschlusses von getrockneter und zerkleinerter, geschälter oder ungeschälter Ölsaat mit einem mehrstufigen, im Gleichstrom oder Gegenstrom gestalteten kontinuierlichen oder quasikontinuierlichen Extraktionsverfahren dar, wobei eine Kombination beider Verfahrensvarianten möglich ist. Auf eine Konditionierung und das Auspressen der Ölsaat, wie sie bei dem konventionellen Pressverfahren und der Hexan-Extraktion notwendig ist, kann verzichtet werden.

Für den Zellaufschluss wird eine Maische aus der Ölsaat und Ethanol hergestellt. Durch eine mechanische Bearbeitung wird die Ölsaat soweit zerkleinert, so dass ein effektiver Zellaufschluss zur Freisetzung des vorhandenen Öls erfolgt.

Die Extraktion des Öls erfolgt mit Ethanol sowie einer Miscella aus Ethanol und Öl und ist eine Kombination von Lösungsmittel- und Verdrängungsextraktion. Dadurch gelingt es, unter schonenden Extraktionsbedingungen die Menge an Ethanol begrenzt zu halten. Die Extraktion erfolgt in mehreren Stufen. Dabei gehen alle in der Zellmatrix sowie im gelösten und im verdrängten Öl vorhandenen alkohollöslichen Inhaltsstoffe in das Ethanol über. Die dispergierten Öl-Tröpfchen sedimentieren im Lösungsmittel nach unten und bilden eine separate Ölphase aus.

Nach der abgeschlossenen Extraktion wird der feste Extraktionsrückstand mechanisch separiert und getrocknet. Der flüssige Extrakt wird nach der Abkühlung in Miscella, Extraktmix und freies Öl getrennt. Die Miscella und das nach der Aufarbeitung zurückgewonnene Ethanol werden dem Prozess wieder zugeführt.

Dieser Verfahrensansatz beinhaltet, dass durch die Prozessführung bei der Ölsaatenverarbeitung ohne Pressung der Ölsaat, sondern nur durch Lösungsmittel- und Verdrängungsextraktion mit Ethanol, vor allem bezogen auf Rapssaat, die weitgehende Eliminierung antinutritiver Substanzen aus den Produktphasen Extraktionsmehl und Öl gelingt sowie Bitterstoffe und Farbkomponenten abgetrennt werden können. Dies ist Voraussetzung für den Einsatz des Extraktionsmehls als höherwertiges Futtermittel sowie als Ausgangsprodukt für die Herstellung von hochwertigen Proteinen, vor allem bezogen auf Raps. So kann zum Beispiel Rapsextraktionsmehl das Wert bestimmende Produkt der Rapsverarbeitung werden. Wertstoffe, wie Phospholipide, phenolische Verbindungen oder Glucosinolate, sind zudem leichter zugänglich und steigern die Wertschöpfung zum Beispiel von Raps maßgeblich. Die Verarbeitungsstrategie erlaubt zudem die einfache Isolierung eines Rohöls mit deutlich verbesserter Qualität gegenüber den industriell etablierten Verfahren (siehe oben zu Halb-Raffinat-Qualität).

Ein besonderer Vorteil des Verfahrens wird darin gesehen, dass die Extraktion unterhalb der Siedetemperatur von Ethanol und unter atmosphärischen Bedingungen erfolgt. Trotz geringen Lösungsvermögens des Ethanols unter diesen Bedingungen erfolgt eine vollständige Extraktion durch Verdrängen des Öls aus der Samenzelle. Das so verdrängte Öl liegt als freie Ölphase vor und kann durch ein einfaches Abscheideverfahren gewonnen werden. Das Öl der freien Ölphase weist vorteilhaft eine Halbraffinat-Qualität auf. Das Ethanol kann auf einfache Weise über einen Abscheidevorgang dem Prozess wieder zugeführt werden.

Zur Lösung der Aufgabe ist es auch denkbar, die vorbeschriebenen Ausführungsformen der jeweiligen Verfahrensschritte zweckmäßig miteinander zu kombinieren.

Nachfolgend soll die Erfindung anhand einiger Ausführungsbeispiele und zugehöriger Figuren eingehender erläutert werden. Die Ausführungsbeispiele sollen dabei die Erfindung beschreiben, ohne diese zu beschränken.

Es zeigen die
Fig. 1 eine schematische Darstellung der Stufen des erfindungsgemäßen Verfahrens im Gleichstromprinzip - beispielhaft an einer dreistufigen Extraktion
Fig. 2 eine schematische Darstellung der Stufen des erfindungsgemäßen Verfahrens im Gegenstromprinzip - beispielhaft an einer dreistufigen Extraktion und
Fig. 3 eine schematische Darstellung einer Extraktionsanordnung.

In einem ersten Ausführungsbeispiel wird bezugnehmend auf die Fig. 1 das Verfahren als Gleichstromprinzip im Wesentlichen am Beispiel einer Rapssaat in einer dreistufigen Extraktion dargestellt.

Dabei wird zunächst aus der Ölsaat, welche beispielsweise getrocknet und zerkleinert wurde, mit Ethanol eine Maische hergestellt. Anschließend erfolgt der mechanische Zellaufschluss, beispielsweise mittels eines Rotor-Stator-Systems. Nachfolgend erfolgt die Lösungs- und Verdrängungsextraktion, bei der das Öl zu einem Teil sich in der alkoholischen Phase löst und bei Überschreiten der Lösungskapazität des alkoholischen Lösungsmittels (Verdrängung) sich in Form von Öltropfen im alkoholischen Lösungsmittel sammelt. Nachfolgend erfolgt eine Separation von Miscella und freier Ölphase. Die Miscella kann, nach der Abtrennung der freien Ölphase, direkt für weitere Verdrängungsstufen genutzt werden. Des Weiteren erfolgt bei der Lösungsmittelrückgewinnung mittels Verdampfer die Separation des gelösten Öls und der Wertstoffe als Sumpfprodukt (Destillationsrückstand). Dadurch kann eine wiederholte Nutzung des alkoholischen Lösungsmittels (Destillat) erzielt werden.

Im Ergebnis werden durch das Extraktions- und Verdrängungsverfahren freie und gelöste Ölphasen, alkohollösliche Wertstoffe, wie etwa Phospholipide, phenolische Verbindungen oder Glucosinolate, und eine Feststoffphase (Rapsextraktionsmehl) erhalten, welche beispielsweise als hochwertiges Futtermittel sowie als Ausgangsprodukt zur Proteingewinnung betrachtet werden kann.

In einem weiteren Ausführungsbeispiel ist in der Fig. 2 alternativ das vorbeschrieben Ausführungsbeispiel in Form des Gegenstromverfahrens dargestellt. Dabei wird die Maische aus dem Ausgangsprodukt und der Miscella hergestellt. Frisches Ethanol wird am Ende der Extraktion zugegeben und im Gegenstrom zum Feststoff durch die Extraktionsstufen geführt.

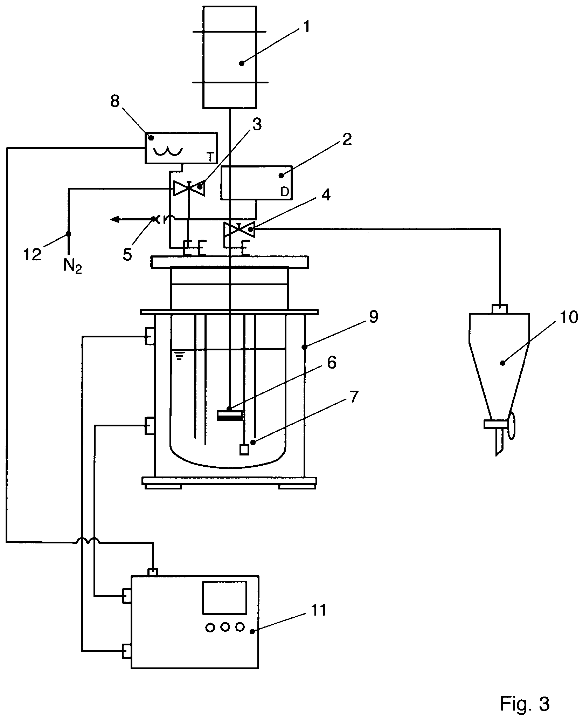

In einem weiteren Ausführungsbeispiel wird das erfindungsgemäße Verfahren im Labormaßstab in der Fig. 3 beschrieben.

Dabei werden 122 g Rapssaat (geschält oder ungeschält) mit 488 g 96 Vol.-%igem Ethanol in einem 1 I Druckreaktorgefäß 9 suspendiert. Sowohl der Druckreaktor 9 als auch das Ethanol sind auf ca. 60 °C vorgewärmt.

Anschließend wird der Druckreaktor 9 geschlossen und die vorhandene Luft durch Einblasen von Stickstoff verdrängt. Der Zellaufschluss erfolgt durch den eingebauten Rotor-Stator 1 mit dem Dispergierwerkzeug 6 bei einer Umfangsgeschwindigkeit von 18,8 m s⁻¹.

Nach 15 min ist die Saat vollständig aufgeschlossen, das heißt die mittlere Partikelgröße beträgt ca. 30 µm. Während des Zellaufschlusses wurde die alkoholische Lösung mit Öl gesättigt (Miscella). Das überschüssige freie Öl (Öl₁), das nicht mehr gelöst werden kann, liegt als freie Öl-Tröpfchen in der Miscella vor. Des Weiteren werden die alkohollöslichen Inhaltsstoffe (Phospholipide, Oligosaccharide, phenolische Verbindungen und Glucosinolate) in der Miscella gelöst, sichtbar durch eine orange-rote Farbe.

Der Druckreaktor 9 wird anschließend unter Überdruck (2 - 3 bar) gesetzt. Durch eine eingebaute Filterfritte (Porengröße 15 µm) wird die flüssige Phase (Miscella und freies Öl) herausgedrückt und in einen Scheidetrichter 10 geleitet. Die Filtration dauert ca. 1 - 2 h. Wird die Suspension während der Filtration gerührt, kann die Ausbildung eines Filterkuchens vermieden werden. Die Filtrationsdauer sinkt dadurch auf ca. 15 - 30 min. Nach der Filtration bleibt im Reaktor ein teilentölter Extraktionsrückstand mit einem Miscellaanteil von 40 - 60 % zurück.

Im Scheidetrichter 10 trennen sich die flüssigen Phasen voneinander. Die orange-rote Miscella bildet die obere Phase und das freie Öl sinkt nach unten. Die Miscella kühlt auf Raumtemperatur ab. Dadurch wird die maximale Öllöslichkeit der Miscella reduziert, das heißt das in der Miscella gelöste Öl fällt teilweise aus und sinkt ebenfalls im Scheidetrichter nach unten. Zudem kann sich dazwischen eine dritte Phase, der sogenannte Extraktmix, ausbilden.

Das freie Öl (Öl₁) wird aus dem Scheidetrichter 10 abgezogen. Anschließend wird die Miscella für die weitere Entölung wieder in den Druckreaktor 9 zurückgeführt. Im Druckreaktor 9 wird die Miscella gerührt und auf 60 °C erwärmt. Anschließend werden die oben beschriebenen Schritte der Filtration, der Abtrennung des freien Öls und der Rückführung der Miscella so oft wiederholt, bis nach der Filtration kein freies Öl (Öl₁) mehr im Scheidetrichter gefunden wird.

Durch Einsatz von Ultraschall und des Rührers kann die Menge des pro Wiederholungsstufe separierten freien Öls (Öl₁) erhöht werden. Die aufsummierte Ausbeute an freiem Öl (Öl₁) bleibt nahezu unverändert. Resultierend daraus kann durch den Energieeintrag aus Rühren und Ultraschall lediglich die Anzahl der notwendigen Wiederholungsstufen reduziert werden. In den Laborversuchen wurde nach 2 - 5 Wiederholungen kein freies Öl mehr im Scheidetrichter gefunden.

Anstelle der Miscella wird nun 488 g frischer Alkohol in den Reaktor 9 geführt. Dieser wird im Reaktor gerührt und auf 60 °C erwärmt. Anschließend erfolgt die oben beschriebene Filtration. Dieser "Waschvorgang" des Extraktionsrückstandes dient zum Herauslösen der letzten Ölreste und vorhandener alkohollöslicher Inhaltsstoffe. Bei Bedarf kann dieser Waschvorgang abschließend wiederholt werden.

Für die Lösungsmittelrückgewinnung werden die gesamte Miscella und der Extraktmix schonend im Rotationsverdampfer eingedampft. Nach der Entfernung des Ethanols, welcher in den Extraktionskreislauf zurückgeführt wird, bleibt im Rotationsverdampfer eine flüssige Ölphase (Öl₂) und eine orange-rote feste Phase, das sogenannte Sumpfprodukt (bestehend aus Öl, Phospholipiden, Oligosacchariden, phenolische Verbindungen und Glucosinolaten), zurück. Das Sumpfprodukt wird nachfolgend mit Aceton gewaschen. Dabei bleibt eine acetonunlösliche Phase, bestehend aus Phospholipiden und den Oligosacchariden, zurück und wird abgetrennt. Bei der anschließenden Aufarbeitung/Abdestillation des Acetons wird neben einer flüssigen Ölphase (Öl₃) auch eine feste Phase gewonnen. Die feste Phase des aceton-löslichen Teiles besteht hauptsächlich aus den phenolischen Verbindungen und den Glucosinolaten.

Der alkoholfeuchte Extraktionsrückstand (Feststoffgehalt ca. 40 - 60 %) wird anschließend schonend getrocknet. Das dabei abdestillierte Ethanol wird in den Extraktiönskreislauf zurückgeführt. Das getrocknete Extraktionsmehl hat eine helle Farbe und ist arm an Sinapin sowie Glucosinolaten. Es ist damit hochwertiger als Extraktionsmehle aus der konventionellen Ölsaaten-Verarbeitung. Mit einem Proteingehalt von über 50 % und einem Restölgehalt von ≤ 3 % bietet es bessere Voraussetzungen für die Verarbeitung zu hochwertigen Proteinpräparaten sowie als hochwertiges Futtermittel.

Das verdrängte Öl (Öl₁) enthält, nach der Separation im Scheidetrichter, etwa 6 - 9 % Ethanol. Nach einer schonenden Verdampfung wird das abdestillierte Ethanol in den Extraktionskreislauf zurückgeführt. Im Öl₁ ist der Anteil an freien Fettsäuren mit 0,03 - 0,6 % sehr niedrig. Auch der Phosphorgehalt ist mit 0,8 - 7 ppm sehr gering. In den extrahierten Ölen Öl₂ und Öl₃ liegen die Gehalte an freien Fettsäuren und Phosphor höher.

In dem Laborversuch werden ca. 70 % des in der Rapssaat enthaltenen Öls aus der Saat verdrängt (Öl₁). Der aus der Miscella extrahierte Ölanteil (Öl₂) entspricht etwa 23 % des in der Rapssaat enthaltenen Öls. Das Öl₃, gewonnen aus dem acetonlöslichen Anteil des Sumpfproduktes, entspricht etwa 4 % des in der Rapssaat enthaltenen Öls. Das restliche Öl verbleibt als Restölgehalt im Extraktionsmehl.

Der acetonunlösliche Teil aus dem Sumpfprodukt und dem Extraktmix, bestehend überwiegend aus Phospholipiden und Oligosacchariden, stellt die phospholipidreiche Phase dar. Diese Lecithin-Phase ist dabei weitgehend wasserfrei. Der konventionelle Weg zur Lecithin-Gewinnung, mit Ölentschleimung und anschließender aufwändiger Trocknung, kann somit entfallen.

Nachfolgend ist die Massenbilanz für das Ausführungsbeispiel dargestellt. Aus den eingesetzten 122 g geschälte Rapssaat (3 % Feuchte) werden die folgenden Produkte gewonnen:
43 g Öl₁ (trocken/ethanolfrei)
14 g Öl₂
4 g Öl₃
44 g Extraktionsmehl (trocken/ethanolfrei)
11 g Phospholipide + Oligosaccharide
2 g phenolische Verbindungen + Glucosinolate
4 g Wasser, verdunstet beim Trocknen.

In einem weiteren Ausführungsbeispiel erfolgt der Zellaufschluss alternativ mit Hochdruck-Homogenisatoren. Bei der Wahl des Zellaufschlussverfahrens ist es entscheidend, dass ein vollständiger Aufschluss mit einer mittleren Partikelgröße ca. 30 µm erreicht wird.

In einem weiteren Ausführungsbeispiel erfolgt die Abtrennung der flüssigen Phasen (Miscellalfreies Öl) vom Extraktionsrückstand wahlweise mittels Druckfiltration, Siebpressen, Siebzentrifuge oder Siebdekanter. Entscheidend ist die sichere Abtrennung der Fein- und Feinstpartikel aus dem Zellaufschluss. Bei entsprechend großer Trennfläche und der Reduzierung der Filterkuchenbildung kann die Trennzeit auf ein Minimum reduziert werden.

In einem weiteren Ausführungsbeispiel erfolgt die Separation der flüssigen Phasen in einem Sedimentationstank oder mittels Zentrifugalkraft. Wichtig ist, dass vor der Abtrennung des freien Öls die Miscella auf vorzugsweise 4° C - 25° C gekühlt wird. In einem kontinuierlichen Verfahren erfolgt dies über einen Wärmetauscher.

In einem weiteren Ausführungsbeispiel erfolgt die Extraktion bei 1 - 6 bar, bevorzugt bei Umgebungsdruck unterhalb der Siedetemperatur des Lösungsmittels.

In einem weiteren Ausführungsbeispiel wird der alkoholfeuchte Extraktionsrückstand erst mechanisch ausgepresst und anschließend im Vakuumtrockner schonend getrocknet.

In einem weiteren Ausführungsbeispiel erfolgt die Rückgewinnung des Ethanols mittels Vakuumverdampfung. Vor der Eindampfung kann eine Aufkonzentration der Miscella mittels Membrantrennverfahren, vorzugsweise Ultra-Filtration, erfolgen.

In einem weiteren Ausführungsbeispiel erfolgt der Aufschluss der geschälten Rapssaat mit dem Dispergierwerkzeug 6 und dem Rotor-Stator-System 1 im Druckreaktor 9. Das Dispergierwerkzeug 6 wurde mit einem Bodenabstand von 48 mm eingebaut. Zusätzlich wurden für eine bessere Durchmischung vier Tauchrohre 7 als Stromstörer im System integriert. Im Druckreaktor 9 wurden die optimalen Bedingungen für einen effektiven Zellaufschluss ausgewählt. Es ergaben sich für den Zellaufschluss im Druckreaktor 9 eine Dispergierdauer von 15 min, eine Drehzahl von 20000 rpm (Umfangsgeschwindigkeit 18,8 m s⁻¹) und ein Feststoffgehalt von 20 %. Zusätzlich wurde während des Zellaufschlusses im Druckreaktor 9 ein Überdruck von 1 bar eingestellt und der Mantel auf 60 °C temperiert. Vor der Durchführung des Aufschlusses wurden sowohl die Rohrleitung als auch der Druckreaktor 9 über einen Stickstoffanschluss 12 mit Stickstoff inertisiert, sodass oxidative Prozesse reduziert werden können.

Für den Zellaufschluss mit anschließender Extraktion des Öls aus den aufgeschlossenen Rapskernen wurde Ethanol (96,0 Vol.-%) verwendet. Entsprechend des angestrebten Feststoffgehaltes von 20 % wurde Ethanol mit der geschälten Rapssaat versetzt, sodass eine Gesamtmasse von 610 g resultierte.

Zur Gewinnung des Extraktes wurde bei den Versuchen im Druckreaktor 9 das Ethanol-Öl-Gemisch unter Anlegen von Überdruck aus den Druckreaktor 9 gepresst. Um ein möglichst partikelfreies Extrakt zu gewinnen, wurde ein inline Filter mit einem Porendurchmesser von 15 µm in das System integriert. Das filtrierte Extrakt wurde in einem Scheidetrichter 10 aufgefangen. Es besteht aus den flüssigen Phasen Miscella und dem freien Öl. Die Extraktmixphase konnte bei diesem Ausführungsbeispiel nicht festgestellt werden.

Der im Druckreaktor 9 verbleibende Extraktionsrückstand wies nach der Filtration eine Restfeuchte von ca. 50 - 60 % auf. Je nach Versuchsanordnung wurde der Rückstand getrocknet oder mit Ethanol versetzt. Mittels Spatel wurde die Suspension manuell homogenisiert, anschließend der Reaktor druckdicht verschlossen und mit Stickstoff inertisiert. Durch Anlegen eines Überdrucks wurde das Extraktionsmehl abermals filtriert. Dieser Vorgang wurde entsprechend der Versuchsanordnung wiederholt.

### Bezugszeichenliste

- 1 -: Antrieb Rotor-Stator-System
- 2 -: Manometer
- 3 -: Nadelventil 1
- 4 -: Nadelventil 2
- 5 -: Berstscheibe
- 6 -: Dispergierwerkzeug
- 7 -: Tauchrohr mit inline Filter
- 8 -: Temperaturmessgerät
- 9 -: Druckreaktor mit Temperier-Mantel
- 10-: Scheidetrichter
- 11: Thermostat
- 12-: Stickstoffanschluss

## Patentansprüche

1. Verfahren zum kombinierten Zellaufschluss und Extraktion ölhaltiger Saaten, umfassend die Schritte:
- Herstellen einer Maische aus einer Ölsaat und Ethanol als Lösungsmittel, wobei die Ölsaat einen Ölgehalt von ≥ 30 Masse-% aufweist und ausgewählt ist aus Raps- und Sonnenblumensaat,
- Zellaufschluss der Ölsaaten in Ethanol, wobei der Zellaufschluss mechanisch erfolgt, bis eine mittlere Partikelgröße von ≤ 50 µm erreicht wird, wodurch die Ölsaat soweit zerkleinert wird, dass ein effektiver Zellaufschluss zur Freisetzung des vorhandenen Öls erfolgt,
- eine nachfolgende ethanolische Extraktion durch eine Kombination von Lösungsmittel- und Verdrängungsreaktion, wobei als alkoholisches Lösungsmittel Ethanol mit einem Wassergehalt von maximal 5 Gew.-% verwendet wird und der kleinere Teil des in den Samenzellen der Ölsaat enthaltenen Öls und der darin enthaltenen alkohollöslichen Inhaltstoffe entsprechend dem Lösungsvermögen des Ethanols für das Öl und die alkohollöslichen Inhaltsstoffe in das Ethanol übergehen und ein anderer größerer Teil des Öls durch das Ethanol aus den Samenzellen der Ölsaat verdrängt wird, wobei sich eine freie Ölphase im Ethanol ausbildet,
- Abtrennen der freien Ölphase und des im Ethanol gelösten Öls und Abtrennen der alkohollöslichen Inhaltsstoffe aus dem Ethanol, wobei die freie Ölphase bei der Abtrennung einen Anteil an Phosphatiden von ≤ 0,1, bevorzugt ≤ 0,025 %, und einen Anteil freier Fettsäuren von ≤ 0,5, bevorzugt ≤ 0,3 %, aufweist,
- Separation des verbleibenden Extraktionsrückstandes nach der Extraktion und Abtreiben des restlichen Ethanols im Extraktionsrückstand unter schonenden Bedingungen im Vakuumbereich bei einer Temperatur T ≤ 90 °C und einem Druck p ≤ 500 mbar.a,
**dadurch gekennzeichnet, dass** Zellaufschluss und Extraktion bei einem definierten Masse-Verhältnis von Ölsaat zu Ethanol von 1 : 3 bis 1 : 8, bevorzugt bei 1 : 5, durchgeführt werden und die Extraktion unterhalb der atmosphärischen Siedetemperatur des Ethanols erfolgt, wodurch die Menge des aus der Ölsaat freigesetzten/verdrängten Öls das Löslichkeitsvermögen des Ethanols übersteigt und das freigesetzte/verdrängte Öl nicht gelöst, als separate flüssige Phase vorliegt und ohne Destillation gewonnen wird.

2. Verfahren nach Anspruch 1, **dadurch gekennzeichnet, dass** vor dem Herstellen einer Maische aus Ölsaat und Ethanol die Trocknung der Ölsaat auf einen Wassergehalt ≤ 5% erfolgt.

3. Verfahren nach Anspruch 1 oder 2, **dadurch gekennzeichnet, dass** das Verfahren als kontinuierliches, mehrstufiges, im Gleichstrom oder Gegenstrom ausgestaltetes Extraktionsverfahren ausgebildet ist.

4. Verfahren nach einem der Ansprüche 1 bis 3, **dadurch gekennzeichnet, dass** der Zellaufschluss mittels eines Rotor-Stator-Systems oder mittels Hochdruck-Homogenisatoren erfolgt.

5. Verfahren nach einem der Ansprüche 1 bis 4, **dadurch gekennzeichnet, dass** die Abtrennung der flüssigen Phasen Miscella und freies Öl von den Partikeln nach dem Zellaufschluss mittels Druckfiltration, Siebpressen, Zentrifuge oder Dekanter erfolgt.

6. Verfahren nach Anspruch 4 oder 5, **dadurch gekennzeichnet, dass** durch den Einsatz von Ultraschalltechnologien sowie Rührwerke der Zellaufschluss und die anschließende Abtrennung der flüssigen Phasen beschleunigt werden.

7. Verfahren nach einem der Ansprüche 1 bis 6, **dadurch gekennzeichnet, dass** der ethanolfeuchte Extraktionsrückstand nach der erfolgten Extraktion erst mechanisch ausgepresst und anschließend unter Bedingungen im Vakuumbereich bei einer Temperatur zwischen 50 und 90 °C und einem Druck zwischen 50 und 500 mbar.a getrocknet wird.

8. Verfahren nach einem der Ansprüche 1 bis 7, **dadurch gekennzeichnet, dass** nach erfolgter Auftrennung die Miscella, ein während der Gewinnung von Pflanzenölen als Zwischenprodukt anfallendes Stoffgemisch aus organischem Extraktions-/Lösemittel und darin gelöstem Öl, dem verbleibenden Extraktionsrückstand wieder zugeführt und dadurch eine wiederholte Nutzung des Ethanols für weitere Einsätze beim Zellaufschluss und der Extraktion ermöglicht wird.

9. Verfahren nach einem der Ansprüche 1 bis 8, **dadurch gekennzeichnet, dass** bei der Separation des gelösten Öls und der Wertstoffe aus der Miscella sowie nachfolgend aus dem Extraktmix das Ethanol zurückgewonnen wird und für weitere Extraktionen zur Verfügung steht.

10. Verfahren nach einem der Ansprüche 1 bis 9, **dadurch gekennzeichnet, dass** geschälte Saat als auch ungeschälte Saat verarbeitet werden kann.

## Claims

1. Method for the combined cell disruption and extraction of oil-containing seeds, comprising the steps:
- production of a mash of an oilseed and ethanol as solvent, where the oilseed has an oil content of ≥ 30 % by mass and is selected from rapeseed and sunflower seed,
- cell disruption of the oilseeds in ethanol, where the cell disruption is effected mechanically, until an average particle size of ≤ 50 µm is achieved, whereby the oilseed is comminuted to such an extent that an effective cell disruption is effected to release the oil present,
- a subsequent ethanolic extraction by way of a combination of solvent reaction and displacement reaction, where the alcoholic solvent used is ethanol having a water content of at most 5 % by weight and the smaller part of the oil contained in the seed cells of the oilseed and the alcohol-soluble constituents contained therein pass into the ethanol in accordance with the dissolution capacity of the ethanol for the oil and the alcohol-soluble constituents and another larger part of the oil is displaced from the seed cells of the oilseed by the ethanol, forming a free oil phase in the ethanol,
- removal of the free oil phase and of the oil dissolved in the ethanol and removal of the alcohol-soluble constituents from the ethanol, where the free oil phase in the removal has a proportion of phosphatides of ≤ 0.1 %, preferably ≤ 0.025 %, and a proportion of free fatty acids of ≤ 0.5 %, preferably ≤ 0.3 %,
- separation of the remaining extraction residue after the extraction and expulsion of the residual ethanol in the extraction residue under gentle conditions in the vacuum range at a temperature T ≤ 90 °C and a pressure p ≤ 500 mbar.a,
**characterized in that** cell disruption and extraction are carried out at a defined mass ratio of oilseed to ethanol of 1:3 to 1:8, preferably at 1:5, and the extraction is effected below the atmospheric boiling temperature of the ethanol, whereby the amount of the oil released/displaced from the oilseed exceeds the dissolution capacity of the ethanol and the released/displaced oil does not dissolve, is present as a separate liquid phase and is obtained without distillation.

2. Method according to Claim 1, **characterized in that** the oilseed is dried to a water content of ≤ 5 % before the production of a mash of oilseed and ethanol.

3. Method according to Claim 1 or 2, **characterized in that** the method is in the form of a continuous, multistage extraction method of cocurrent or countercurrent design.

4. Method according to any of Claims 1 to 3, **characterized in that** the cell disruption is effected by means of a rotor-stator system or by means of high pressure homogenizers.

5. Method according to any of Claims 1 to 4, **characterized in that** the liquid phases miscella and free oil are removed from the particles after the cell disruption by means of pressure filtration, screen pressing, centrifuge or decanter.

6. Method according to Claim 4 or 5, **characterized in that** the cell disruption and the subsequent removal of the liquid phases are accelerated by the use of ultrasound technologies and stirrer systems.

7. Method according to any of Claims 1 to 6, **characterized in that** the ethanol-moist extraction residue on completion of the extraction is first squeezed mechanically and then dried under conditions in the vacuum range at a temperature between 50 °C and 90 °C and a pressure between 50 and 500 mbar.a.

8. Method according to any of Claims 1 to 7, **characterized in that** on completion of separation the miscella, a substance mixture which is produced as intermediate during the obtaining of plant oils and is composed of organic extractant/solvent and oil dissolved therein, is fed back to the remaining extraction residue and repeated use of the ethanol for further uses in the cell disruption and the extraction is thereby made possible.

9. Method according to any of Claims 1 to 8, **characterized in that** the ethanol is recovered in the separation of the dissolved oil and of the materials of value from the miscella and subsequently from the extract mix and is available for further extractions.

10. Method according to any of Claims 1 to 9, **characterized in that** both hulled seed and unhulled seed can be processed.

## Revendications

1. Procédé de désintégration cellulaire combinée à une extraction de graines oléagineuses, comprenant les étapes suivantes :
- fabrication d'une pâte d'une graine oléagineuse et d'éthanol servant de solvant, la graine oléagineuse présentant une teneur en huile ≥ 30 % en masse et étant choisie parmi une graine de colza et une graine de tournesol,
- désagrégation cellulaire des graines oléagineuses dans de l'éthanol, la désagrégation cellulaire ayant lieu par voie mécanique, jusqu'à obtention d'une granulométrie moyenne s 50 µm, la graine oléagineuse étant broyée jusqu'à arriver à une désagrégation cellulaire efficace permettant la libération de l'huile présente,
- une extraction subséquente à l'éthanol par une combinaison d'une réaction de dissolution et d'entraînement, pour laquelle on utilise en tant que solvant alcoolique de l'éthanol ayant une teneur en eau maximale de 5 % en poids, et la partie la plus petite de l'huile contenue dans les cellules germinales de la graine oléagineuse et des constituants alcooliques qui y sont contenus passe dans l'éthanol d'une manière correspondant au pouvoir de dissolution, dans l'éthanol, de l'huile et des constituants solubles dans l'alcool, et une autre partie de l'huile, plus importante, est entraînée par l'éthanol à partir des cellules germinales de la graine oléagineuse, avec formation d'une phase huileuse libre dans l'éthanol,
- séparation de la phase huileuse libre et de l'huile dissoute dans l'éthanol, et séparation des constituants solubles dans l'alcool à partir de l'éthanol, la phase huileuse libre présentant, lors de la séparation, une proportion de phosphatides s 0,1, de préférence ≤ 0,025 %, et une proportion d'acides gras libres s 0,5, de préférence ≤ 0,3 %,
- séparation du résidu d'extraction restant après extraction et entraînement de l'éthanol résiduel dans le résidu d'extraction dans des conditions ménagées, sous vide, à une température T ≤ 90 °C et sous une pression p ≤ 500 mbar.a,
**caractérisé en ce que** la désagrégation cellulaire et l'extraction sont mises en œuvre pour un rapport en masse parfaitement défini de la graine oléagineuse à l'éthanol de 1:3 à 1:8, de préférence de 1:5, et **en ce que** l'extraction a lieu en dessous de la température d'ébullition de l'éthanol sous la pression atmosphérique, ce en conséquence de quoi la quantité de l'huile libérée de la graine oléagineuse/entraînée est supérieure au pouvoir de dissolution de l'éthanol, et l'huile libérée/entraînée n'est pas dissoute, se présente sous forme d'une phase liquide distincte et est obtenue sans distillation.

2. Procédé selon la revendication 1, **caractérisé en ce que,** avant la fabrication d'une pâte à partir de la graine oléagineuse et d'éthanol, le séchage de la graine oléagineuse a lieu jusqu'à une teneur en eau ≤ 5 %.

3. Procédé selon la revendication 1 ou 2, **caractérisé en ce que** le procédé est réalisé sous forme d'un procédé d'extraction continu, à plusieurs étages, fonctionnant à co-courant ou à contre-courant.

4. Procédé selon l'une des revendications 1 à 3, **caractérisé en ce que** la désagrégation cellulaire a lieu à l'aide d'un système rotor-stator ou d'homogénéisateurs sous haute pression.

5. Procédé selon l'une des revendications 1 à 4, **caractérisé en ce que** la séparation des phases liquides micelles et huile libre d'avec les particules a lieu après la désagrégation cellulaire par filtration sous pression, filtration sur presse à toile, centrifugation ou décantation.

6. Procédé selon la revendication 4 ou 5, **caractérisé en ce que,** par utilisation de technologies ultrasonores et d'agitateurs, il y a accélération de la désagrégation cellulaire et de la séparation subséquente des phases liquides.

7. Procédé selon l'une des revendications 1 à 6, **caractérisé en ce que** le résidu d'extraction, humide d'éthanol, est mécaniquement exprimé après la fin de l'extraction, puis est séché dans des conditions correspondant à un vide à une température entre 50 et 90 °C sous une pression entre 50 et 500 mbar.a.

8. Procédé selon l'une des revendications 1 à 7, **caractérisé en ce que,** après la fin de la séparation, un mélange de substances, obtenu sous forme d'un produit intermédiaire lors de la récupération d'huiles végétales, constitué d'agents d'extraction/de solvants organiques et de l'huile qui y est dissoute, est renvoyé au résidu d'extraction restant, ce qui permet une nouvelle utilisation de l'éthanol pour des applications ultérieures lors de la désagrégation cellulaire et de l'extraction.

9. Procédé selon l'une des revendications 1 à 8, **caractérisé en ce que,** lors de la séparation de l'huile dissoute et des matières utiles à partir des micelles, et aussi, ensuite, à partir du mix d'extraits, l'éthanol est récupéré et est disponible pour d'autres extractions.

10. Procédé selon l'une des revendications 1 à 9, **caractérisé en ce qu'**il est possible de transformer une graine tant dépelliculée qu'une graine non dépelliculée.
